Europäisches Patentamt

European Patent Office

Office européen des brevets

(19)

(11) Veröffentlichungsnummer: **0 247 545 B1**

(12) **EUROPÄISCHE PATENTSCHRIFT**

(45) Veröffentlichungstag der Patentschrift: 22.05.91

(51) Int. Cl.⁵: **A22C 11/10**

(21) Anmeldenummer: 87107517.2

(22) Anmeldetag: 23.05.87

(54) **Verfahren und Vorrichtung zum Abteilen eines auf einem Füllautomaten hergestellten Wurststrangs in einer Vielzahl voneinander trennbarer oder getrennter Würste.**

(30) Priorität: 24.05.86 DE 3617559

(43) Veröffentlichungstag der Anmeldung:
02.12.87 Patentblatt 87/49

(45) Bekanntmachung des Hinweises auf die
Patenterteilung:
22.05.91 Patentblatt 91/21

(84) Benannte Vertragsstaaten:
**AT BE CH DE ES FR GB GR IT LI NL SE**

(56) Entgegenhaltungen:
EP-A- 0 000 821          EP-A- 0 016 500
EP-A- 0 183 229          DE-A- 1 586 210
DE-A- 2 344 226          DE-A- 2 420 202
DE-A- 2 550 042          FR-A- 2 089 747
FR-A- 2 101 614          GB-A- 2 100 110
US-A- 3 191 222          US-A- 3 672 001

(73) Patentinhaber: **Kollross, Günter**
**Am Wallerstädter Weg 20**
**W-6080 Gross Gerau-Dornheim(DE)**

(72) Erfinder: **Kollross, Günter**
**Am Wallerstädter Weg 20**
**W-6080 Gross Gerau-Dornheim(DE)**

(74) Vertreter: **Beyer, Werner, Dipl.-Ing. et al**
**Patentanwälte Werner Beyer Bernd Jochem**
**Staufenstrasse 36**
**W-6000 Frankfurt/Main(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Abteilen eines auf einem Füllautomaten hergestellten Wurststrangs in eine Vielzahl voneinander trennbarer oder getrennter Würste durch intermittierendes Füllen eines vom Füllrohr des Füllautomaten durch eine Darmbremse ablaufenden Wursthüllenschlauchs, der in den Füllpausen unmittelbar vor der Füllrohrmündung mit Hilfe von Verdrängungswerkzeugen eingeschnürt und durch Setzen zweier zueinander beabstandeter Klammern aus je einem beliebig nachfüllbaren Klammervorrat mittels an den Verdrängungswerkzeugen angeordneter Verschließwerkzeuge unter Bildung einer dazwischen liegenden Trennstelle verschlossen sowie gegebenenfalls an der Trennstelle durchtrennt wird, wobei das Einschnüren zunächst auf einer eng begrenzten Länge des Wurststrangs erfolgt und die Einschnürung anschließend durch axiales Spreizen der Verdrängungswerkzeuge auf das Abstandsmaß der Klammern ausgedehnt wird, sowie eine Vorrichtung zur Durchführung eines derartigen Verfahrens.

Ein solches Verfahren bzw. eine dazu dienende Vorrichtung kommen vor allem bei kleineren und mittleren Wurstkalibern zur Anwendung, bei denen die einzelnen Würste verhältnismäßig kurz sind und demzufolge die bei der Verarbeitung von Einzelwursthüllen bedingten Totzeiten zum Aufziehen einer neuen Hülle auf das Füllrohr nach jedem Füll- und Verschließvorgang das Produktionsergebnis erheblich mindern.

Die Herstellung von Strangwurst nach dem eingangs angegebenen Verfahren wirft jedoch andere Probleme auf, die bisher noch nicht befriedigend gelöst worden sind. Insbesondere bereitet der unterbrechungslose Nachschub der Verschlußklammern zu den an die Verdrängungswerkzeuge gebundenen Verschließwerkzeugen Schwierigkeiten, die nur einen begrenzten Klammervorrat zulassen und ein öfteres Stillsetzen der Maschine zum Nachfüllen erfordern.

Ein weiteres Problem bildet das Bestücken des Füllrohrs mit neuen Hüllenschläuchen, das ein längeres Stillsetzen erfordert, um der Bedienungsperson das einwandfreie Aufziehen eines neuen Schlauchs auf das Füllrohr zu ermöglichen.

Zum gleichzeitigen Setzen zweier Verschlußklammern sind aus der DE-A-2344226 und der GB-A-2100110 Vorrichtungen bekannt, die mit zwei Paaren gegeneinander verschwenkbarer und danach axial zueinanderspreizbarer Verdrängungswerkzeuge arbeiten, von denen die Verschließwerkzeuge zum Setzen der Verschlußklammern getrennt sind. Die Verschließwerkzeuge werden dort erst nach dem Spreizen der Verdrängungswerkzeuge in den dadurch geschaffenen Freiraum eingefahren und weisen von vornherein den erforderlichen Klammerabstand auf. Damit stellt sich das beim eingangs genannten Verfahren vorhandene Problem des unterbrechungslosen Klammernachschubs nicht. Andererseits muß dort zum Neubestücken des Füllrohrs jedesmal die gesamte Vorrichtung mit dem Klammervorrat von Füllrohr entfernt und anschließend wieder herangeführt werden, was wegen der zu bewegenden großen Massen zu beträchtlichen Stillstandszeiten führt.

Aufgabe der Erfindung ist es, die Totzeiten bei der Herstellung von Strangwurst weiter auszuschalten oder zumindest zu verkürzen und dadurch den Wirkungsgrad bei der Herstellung von Strangwurst spürbar zu steigern.

Die Erfindung löst diese Aufgabe verfahrensmäßig dadurch, daß die klammervorräte ortsfest gehalten werden und die beiden Klammern bereits während der dem Einschnüren und Verschließen vorausgehenden Füllphase von den Klammervorräten abgesondert und den Verschlußwerkzeugen bei geöffneten Verdrängungswerkzeugen quer zur Setzrichtung der Klammern vorgelegt werden.

Das erfindungsgemäße Verfahren ermöglicht durch die ortsfeste Bevorratung der Klammern einen beliebigen Nachschub, ohne den Füll- und Abteilvorgang unterbrechen zu müssen, wobei die Verdrängungs- und Verschließwerkzeuge beim axialen Spreizen nicht durch die Masse der Klammervorräte belastet sind und demzufolge schneller zu arbeiten vermögen. Dabei ermöglicht das Vorlegen der Klammern bereits während des Füllvorgangs in besonders vorteilhafter Weise, daß die in Ablaufrichtung des Wursthüllenschlauchs vordere Klammer bereits vor dem Ausdehnen der Einschnürung (24) gesetzt wird und das Ausdehnen der Einschnürung durch Bewegen der Verdrängungs- und Verschließwerkzeuge für diese Klammer vom Füllrohr weg bei ortsfester Stellung der Verdrängungs- und Verschließwerkzeuge für die zweite Klammer erfolgt, woraufhin die zweite Klammer gesetzt wird. Durch dieses vorzeitige Setzen der vorderen Klammer wird vermieden, daß das Wurstbrät beim Ausdehnen der Einschnürung zum Teil auch in den gefüllten Wurststrang verdrängt wird und dadurch in diesem ein unzulässiger Überdruck mit der Gefahr des Platzens entsteht. Die Ausdehnung der Einschnürung findet vielmehr vollständig in Richtung zum Füllrohr unter gleichzeitigem Abziehen von weiterem Schlauchhüllenmaterial statt, wobei die vordere Klammer als Widerlager dient, das die Verdrängung des Wurstbräts beim Einschnüren in den gefüllten Schlauchhüllenstrang verhindert. Um diese Aufgabe mit Sicherheit zu erfüllen, ist es zweckmäßig, daß wenigstens die vordere Klammer so gesetzt wird, daß sich ihre Schenkelenden überlappen. Auch ist es hierbei anzuraten, daß die sich mit den Schenkelenden überlappenden Klammern beim Setzen mit ihren Stegteilen einen solchen Winkel zu einer radialen Querebene zum Wurtsstrang einschließen, daß die Ebenen in denen die einander überlappenden Schenkelenden liegen, senkrecht zur Ache des Wurststrangs verlaufen. Dadurch wird vermieden, daß sich die Schenkelenden beim Spreizen in den Wurststrang eingraben und diesen verletzen.

Noch eine weitere Ausgestaltung des erfindungsgemäßen Verfahrens, bei welchem nach dem vollständigen Verbrauch des vom Füllrohr ablaufenden Wursthüllenschlauchs die Verdrängungs-und Verschließwerkzeuge mit der Darmbremse in eine das Füllrohr freigebende Stellung gebracht werden, die das Aufbringen eines neuen Schlauchhüllenvorrats in der vorerwähnten Freigabestellung selbsttätig in eine mit dem Füllrohr fluchtende Stellung gebracht und mit dem Zurückbringen der Verdrängungs- und Verschließwerkzeuge in die Arbeitsstellung auf das Füllrohr aufgeschoben wird. Mit diesen Ausgestaltungsmerkmalen wird auch die beim Nachrüsten des Füllrohrs mit neuem Schlauchmaterial erforderliche Totzeit wirksam verkleinert, da das Aufziehen der neuen Schlauchhülle selbsttätig erfolgt und keine Rücksicht mehr auf die Geschicklichkeit und die Sorgfalt der Bedienungsperson genommen werden muß.

Eine Vorrichtung zur Durchführung des erfindungsgemäßen Verfahrens mit einer Darmbremse und zwei Paaren gegensinnig betätigbarer V-förmiger Verdrängungswerkzeuge, denen je eine Verschließeinrichtung zugeordnet ist, wobei die beiden Verdrängungswerkzeugpaare in Richtung des Wurststrangs relativ zueinander bewegbar sind, zeichnet sich erfindungsgemäß dadurch aus, daß die in bekannter Weise aus verschieblich antreibbaren Stempeln und festen Matrizen bestehenden Verschließwerkzeuge in die Verdrängungswerkzeuge integriert sind und die die Stempel enthaltenden Verdrängungswerkzeuge quer zur Verschieberichtung der Stempel verlaufende Kanäle aufweisen, durch welche bei geöffneten und ungespreizten Verdrängungswerkzeugen je eine Verschlußklammer aus einem ortsfesten Magazin in die Bewegungsbahn des Verschließstempels einführbar ist.

Nach einem ersten Ausgestaltungsmerkmal für eine solche Vorrichtung sind die Stempel und Matrizen der Verschließeinrichtungen zum Setzen der Klammern mit einander überlappenden Schenkelenden ausgebildet und derart im Winkel zu einer radialen Querebene zum Wurststrang gedreht angeordnet, daß die Ebenen, in denen die einander überlappenden Schenkelenden liegen, senkrecht zur Achse des Wurststrangs verlaufen. Dies bedeutet, daß auch die Klammern den Stempeln der Verschließwerkzeuge in einer um den genannten Winkel gedrehten Stellung vorgelegt werden und daher notwendig die oben erwähnten Kanäle an ihren Enden abgeknickt sind.

Nach einem anderen Ausgestaltungsmerkmal der erfindungsgemäßen Vorrichtung schließen bei geöffneten und ungespreizten Verdrängungswerkzeugen an die darin enthaltenen Kanäle ortsfeste Führungen fluchtend an, in welche jeweils die vorderste Verschlußklammer eines quer dazu vorschiebbaren Klammerstreifens eingreift und jeder Führung ist ein von einem steuerbaren Antrieb betätigbarer Schieber zugeordnet, mit welchem die vorderste Verschlußklammer vom Klammerstreifen abtrennbar und durch die Führung und den Kanal in die Bahn des Verschließstempels beförderbar ist.

Noch ein weiteres Ausgestaltungsmerkmal der erfindungsgemäßen Vorrichtung sieht vor, daß die Verschließstempel von hydraulischen Kraftzylindern antreibbar sind, welche an den Verdrängungswerkzeugen befestigt sind.

nach einem besonderen Merkmal zur vorteilhaften Ausgestaltung der erfindungsgemäßen Vorrichtung sind die Verdrängungswerkzeuge von Kurvenscheiben steuerbar, welche so ausgebildet sind, daß die Einschnürstellung der Verdrängungswerkzeuge über einen größeren Drehwinkel hinweg aufrecht erhalten bleibt, und mit den Kurvenscheiben sind Steuerkurven drehfest verbunden, von denen während der Einschnürstellung der Verdrängungswerkzeuge das Spreizen derselben und das Betätigen der Verschließwerkzeuge steuerbar ist. Mit Hilfe solcher Kurvenscheiben und Steuerkurven läßt sich die gewünschte Aufeinanderfolge der einzelnen Vorgänge auf einfache Weise in der gewünschten zeitlichen Abfolge steuern, wobei es von besonderem Vorteil ist, wenn mit den Kurvenscheiben eine weitere Steuerkurve drehfest verbunden ist, von welcher eine Verringerung der Drehgeschwindigkeit der Kurvenscheiben in der Einschnürstellung der Verdrängungswerkzeuge steuerbar ist. Diese Maßnahme garantiert eine ausreichende Zeitspanne für das Ausdehnen der Einschnürung und das Setzen der beiden Verschlußklammern unabhängig davon, ob diese zeitlich getrennt vor bzw. nach der Ausdehnung oder gleichzeitig nach der Ausdehnung gesetzt werden.

Zweckmäßig sind die Kurvenscheiben und die Steuerkurven auf einer gemeinsamen Welle angeordnet, die von einem elektrischen oder hydraulischen Schaltantrieb nach jedem Füllvorgang um 180° drehbar ist.

Weiterhin sind die Kurvenscheiben zweckmäßig von Kreisscheiben mit auf den gegeneinander weisenden Stirnseiten angeordneten Steuernuten zur Aufnahme der Enden von Steuerzapfen ausgebildet, von denen je ein Verdrängungswerkzeug eines jeden Werkzeugpaars antreibbar ist. Dabei sind die beiden Verdrängungswerkzeuge eines jeden Werkzeugpaars mit Vorteil fest auf den Steuerzapfen und die beiden Verdrängungswerkzeuge

3

des anderen Werkzeugpaars axial verschieblich auf den Steuerzapfen gelagert, und es ist eine steuerbare Spreizeinrichtung zum Verschieben des zweiten Werkzeugpaars auf den Steuerzapfen vorgesehen, die zweckmäßig von einem doppeltwirkenden hydraulischen Kraftzylinder betätigbar ist.

Schließlich sieht noch ein besonderes Ausgestaltungsmerkmal der erfindungsgemäßen Vorrichtung, die gegenüber dem Füllrohr eines Wurstfüllautomaten axial verschieblich angeordnet und mittels eines Verschiebeantriebs aus einer Arbeitsstellung, in welcher die Darmbremse das Füllrohrende übergreift und die Verdrängungswerkzeuge unmittelbar vor der Füllrohrmündung angeordnet sind, in eine das Füllrohr freigebende Stellung verschiebbar ist, vor, daß an der Vorrichtung ein Magazin für zu Hohlstäben geraffte Wursthüllenschläuche sowie eine Haltevorrichtung angebracht sind, welcher nach jedem Verschieben der Vorrichtung in die Freigabestellung ein Hohlstab aus dem Magazin gesteuert zuführbar ist, wobei die Haltevorrichtung eine solche Lage zum Füllrohr des Füllautomaten innehat, daß das Füllrohr beim Zurückverschieben der Vorrichtung in die Arbeitsstellung durch den Hohlstab hindurchfährt und sich dadurch von selbst mit dem Hohlstab belädt.

Die Erfindung wird nachstehend in Verbindung mit einem in den Zeichnungen dargestellten Ausführungsbeispiel näher erläutert. Es zeigen:

Fig. 1    in einer Seitenansicht, teilweise im Schnitt, einen das Füllrohr tragenden Teil einer Wurstfüllmaschine mit einer Vorrichtung gemäß der Erfindung in einer Arbeitsstellung, in welcher eine Wurst vom nachfolgenden Wurststrang abgetrennt und mit Verschlußklammern versehen ist,

Fig. 2    dieselbe Seitenansicht der Vorrichtung in ihrer Ladestellung, in welcher der verschiebliche Teil der Vorrichtung vom Füllrohr weg verschoben ist, um das Füllrohr mit einer neuen Schlauchraupe zu beladen,

Fig. 3    eine Stirnansicht der Vorrichtung, vom Füllautomaten aus gesehen, mit einer zur Aufnahme durch das Füllrohr bereitliegenden Schlauchraupe,

Fig. 4    dieselbe Stirnansicht wie in Fig. 3 im Augenblick der Freigabe einer neuen Schlauchraupe zur Vorlage vor das Füllrohr,

Fig. 5    eine entgegengesetzte Stirnansicht der Vorrichtung mit geöffneten Verdrängungswerkzeugen,

Fig. 6    dieselbe Stirnansicht wie in Fig. 5 mit geschlossenen Verdrängungswerkzeugen,

Fig. 7    einen Querschnitt durch die Verdrängungswerkzeuge nach Linie VII-VII in Fig. 6 vor dem Spreizen der Verdrängungswerkzeuge,

Fig. 8    denselben Querschnitt wie in Fig. 7 nach dem Spreizen der Verdrängungswerkzeuge,

Fig. 9    einen Mittellängsschnitt durch einen Teil der Vorrichtung mit der Lagerung der Steuerwelle und den in die Führungsnuten der Kurvenscheiben eingreifenden Führungszapfen zum Steuern der Verdrängungswerkzeuge,

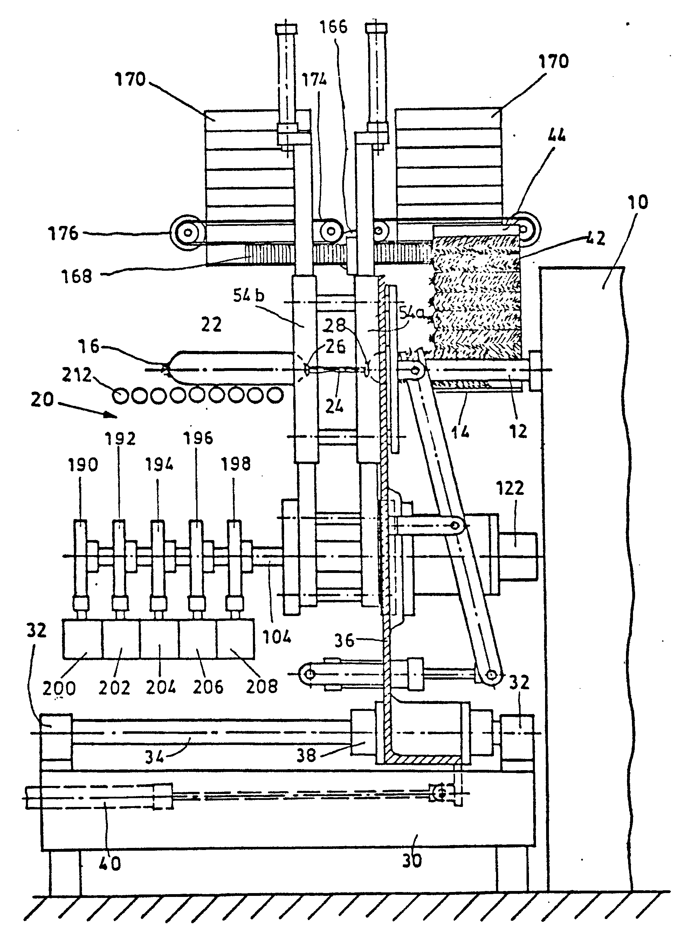

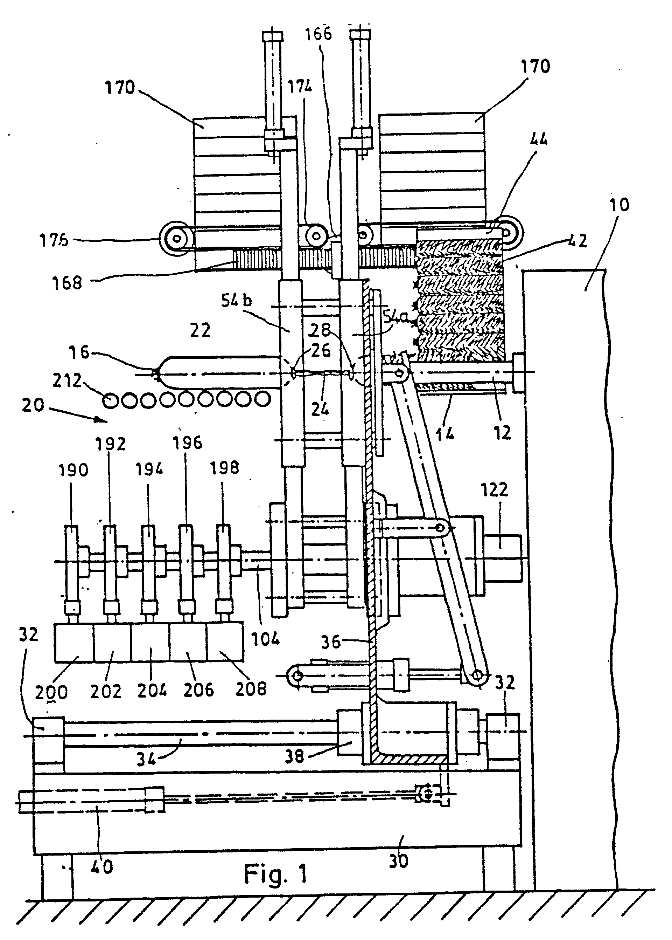

Fig. 1o    einen horizontalen Querschnitt durch die Hauptrahmen der Verdrängungswerkzeuge mit den Kanälen zum Zuführen der Verschlußklammern sowie deren Zuführeinrichtung, wobei je eine Klammer bis unter den Stempel der Verschließeinrichtung vorgeschoben ist, und

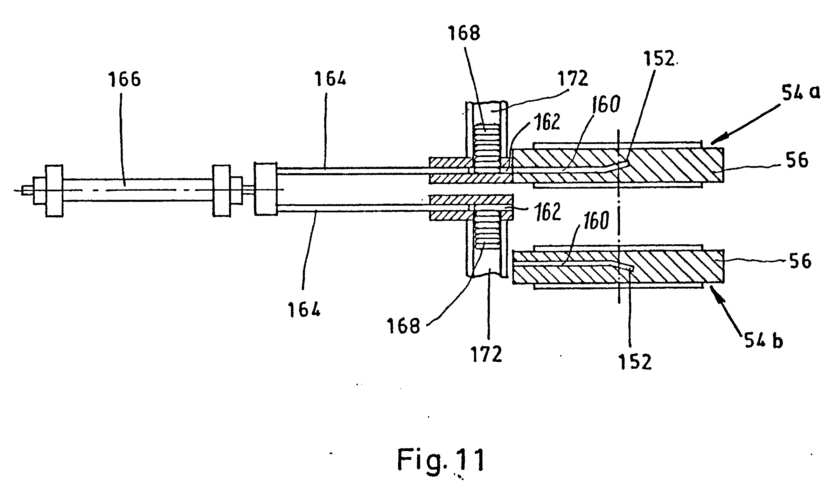

Fig. 11    denselben Querschnitt wie in Fig. 1o bei zurückgezogenen Vorlageschiebern und gespreizten Verdrängungswerkzeugen.

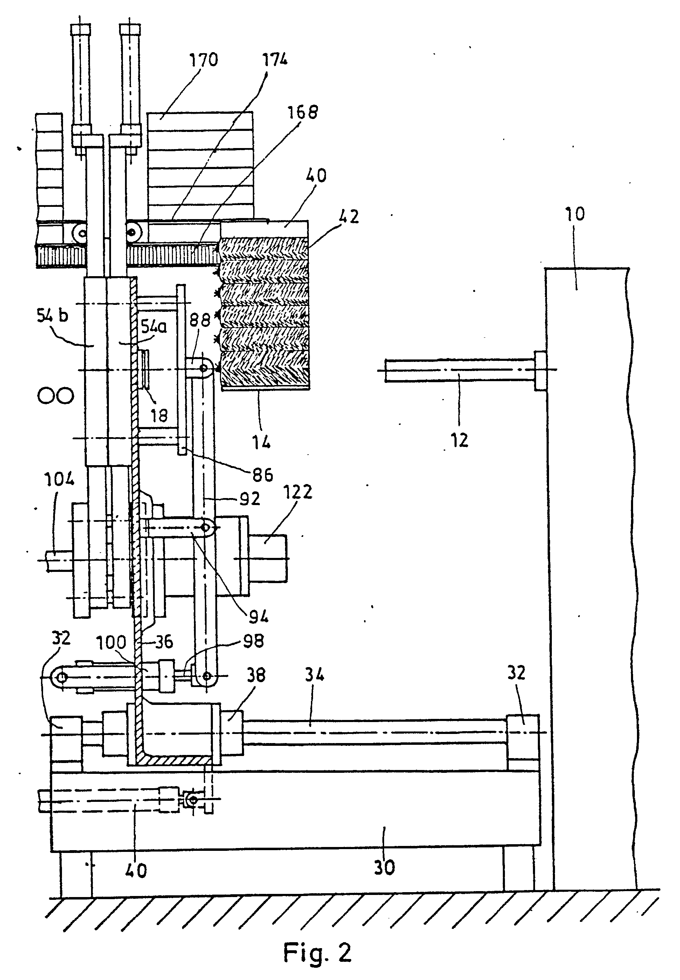

In den Figuren 1 und 2 ist mit 1o ein (größtenteils weggebrochen dargestellter) Wurstfüllautomat - in der Fachsprache auch "Cutter" genannt - bezeichnet, der in bekannter Weise durch einen (nicht gezeigten) Trichter eingefülltes Fleisch zu Wurstbrät zerkleinert und durch ein Füllrohr 12 unter Druck ausstößt. Der Brätausstoß durch das Füllrohr 12 ist steuerbar und kann beliebig ein- und ausgeschaltet werden.

Das vom Füllautomaten 1o ausgestoßene Wurstbrät wird in bekannter Weise in eine Schlauchhülle eingefüllt, die zu einem Hohlstab 14 - in der Fachsprache auch als "Schlauchraupe" bezeichnet - axial zusammengerafft und auf das Füllrohr 12 aufgeschoben ist, wobei das vordere Ende der Schlauchhülle durch eine Verschlußklammer 16 verschlossen ist. Die Schlauchhülle wird beim Füllen von einer (nur in Fig. 2 sichtbaren) Darmbremse 18 abgebremst und bildet dadurch einen prall gefüllten Wurststrang, der mittels einer in ihrer Gesamtheit mit 2o bezeichneten Abteilvorrichtung zu einer Vielzahl voneinander trennbarer oder dabei unmittelbar getrennter Würste 22 unter Bildung von langgestreckten Einschnürungen 24 abgeteilt wird, an welche im Abstand zueinander zwei Verschlußklammern 26, 28 zum Verschließen des hinteren Endes der vorausgehenden Wurst bzw. des vorderen Endes der nachfolgenden Wurst gesetzt werden, zwischen denen der Wurststrang in die Würste 22 unterteilt werden kann.

Die Abteilvorrichtung 2o, die in der Fachsprache auch als "Doppelclipper" bezeichnet wird, hat ein vor dem Füllautomaten am Boden aufgestelltes kastenförmiges Grundgestell 3o, in welchem die (nicht gezeigte) elektrische und hydraulische Steuerung einschließlich einem Aggregat zur Erzeugung der Hydraulikflüssigkeit untergebracht ist. Auf der Oberseite des Grundgestells 3o sind mit Konsolen 32 zwei Führungsstangen 34 mit Querabstand zueinander angebracht, auf denen eine mit (nicht gezeigten) Rippen versteifte Tragplatte 36 mittels Kugelführungsbuchsen 38 verschieblich gelagert ist. Ein hydraulischer Kraftzylinder 4o ermöglicht eine Verschiebung der Tragplatte 36 auf dem Grundgestell 3o zwischen einer in Fig. 1 gezeigten Arbeitsstellung und einer in Fig. 2 gezeigten Ladestellung, in welcher das Füllrohr 12 des Füllautomaten 1o frei zur Beladung mit einer neuen Schlauchraupe 14 ist.

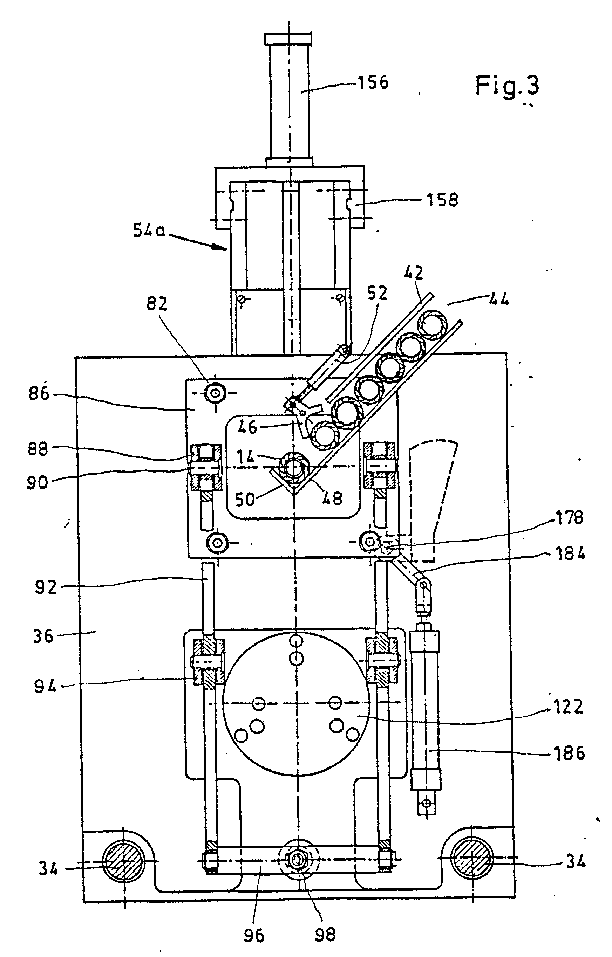

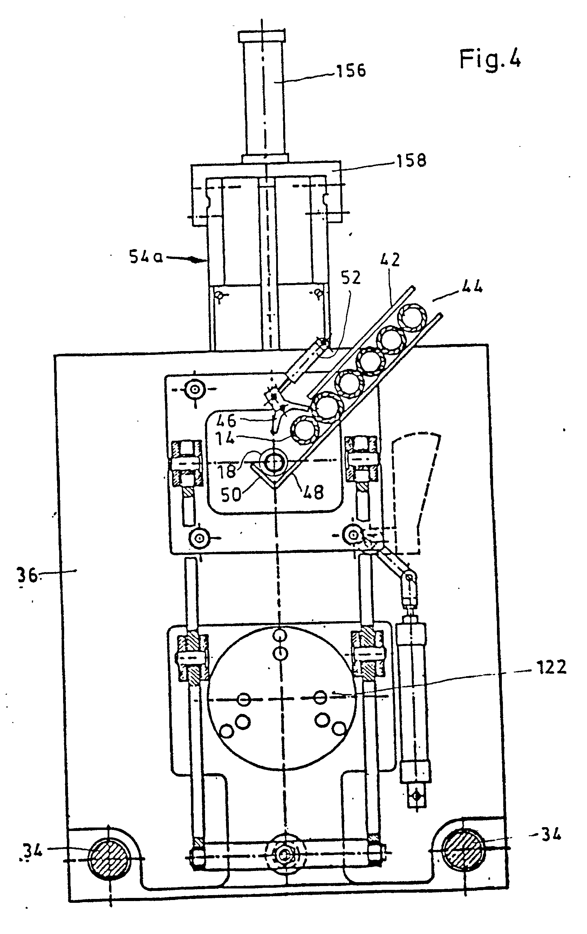

Zur Beladung mit neuen Schlauchraupen 14 trägt die Tragplatte 36 an ihrer Rückseite ein aus den Figuren 1 bis 4 ersichtliches Magazin 42 in Gestalt eines unter einem Winkel von etwa 45° geneigten flachen Kasten, dessen oberes Ende bei 44 zum Einfüllen bzw. Nachfüllen von Schlauchraupen 14 geöffnet ist. Die eingefüllten Schlauchraupen 14 werden von einem doppelarmigen Kipphebel 46 abgefangen und nur einzeln zum unteren Ende des Magazins durchgelassen, an welchem die Unterwand 48 des Kastens mit dessen unterer Endwand 5o ein Prisma bildet, das die darin einfallende einzelne Schlauchraupe 14 in einem mit dem Füllrohr 12 axial fluchtende Stellung bringt, in welcher das Füllrohr 12 beim Verschieben der Tragplatte 36 in die Arbeitsstellung (Fig. 1) die Schlauchraupe 14 erfaßt und sich dadurch selbsttätig mit ihr belädt. Der Kipphebel 46 wird von einem doppelt wirkenden hydraulischen Kraftzylinder 52 zwischen zwei Stellungen (Fig. 3 und 4) hin- und herverschwenkt, wobei er jedes Mal eine Schlauchraupe 14 aus dem darüber befindlichen Stapel zu dem Prisma 48, 5o freigibt.

Das vordere Ende jeder Schlauchraupe 14 ist, wie bereits oben erwähnt, durch eine Klammer 16 oder auf sonstige geeignete Weise verschlossen und wird dadurch beim Vorfahren der Tragplatte 36 in deren Arbeitsstellung vom Füllrohrende mitgenommen und durch die oben erwähnte Darmbremse 18 hindurchgezogen. Die Darmbremse 18 ist an der Tragplatte 36 lösbar befestigt und kann zur Anpassung an unterschiedliche Füllrohrdurchmesser gegen eine größere oder kleinere Darmbremse ausgetauscht werden. Aufbau und Wirkungsweise der Darmbremse sind hinreichend bekannt und bedürfen hier keiner näheren Erläuterung.

Es versteht sich von selbst, daß die Tragplatte 36 im Bereich der Darmbremse 18 mit einer Öffnung versehen ist, die den Durchtritt des Füllrohrs 12 und des davon ablaufenden Schlauchmaterials gestattet.

Zum periodischen Herstellen der Einschnürungen 24 am Wursstrang während vorübergehender Unterbrechungen der Brätförderung des Füllautomaten 10 dienen zwei identisch ausgebildete und spiegelbildlich zueinander angeordnete Verdrängungswerkzeugpaare 54a, 54b, deren Aufbau aus den Figuren 1 und 2 sowie den Figuren 5 bis 8 ersichtlich ist.

Ein jedes Verdrängungswerkzeugpaar besteht aus einem Hauptrahmen 56 und einem darin verschieblichen Hilfsrahmen 58. Der Hilfsrahmen 58 ist weitgehend massiv ausgeführt, während der Hauptrahmen 56 mit Blechen 60, 62 abgedeckt ist, die den Hilfsrahmen 58 zwischen sich aufnehmen.

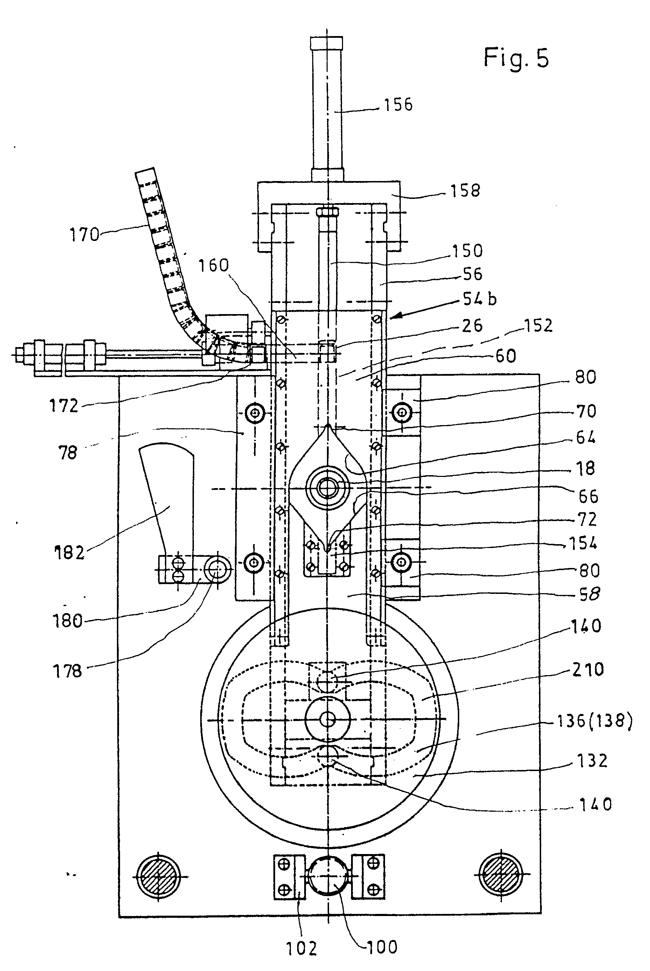

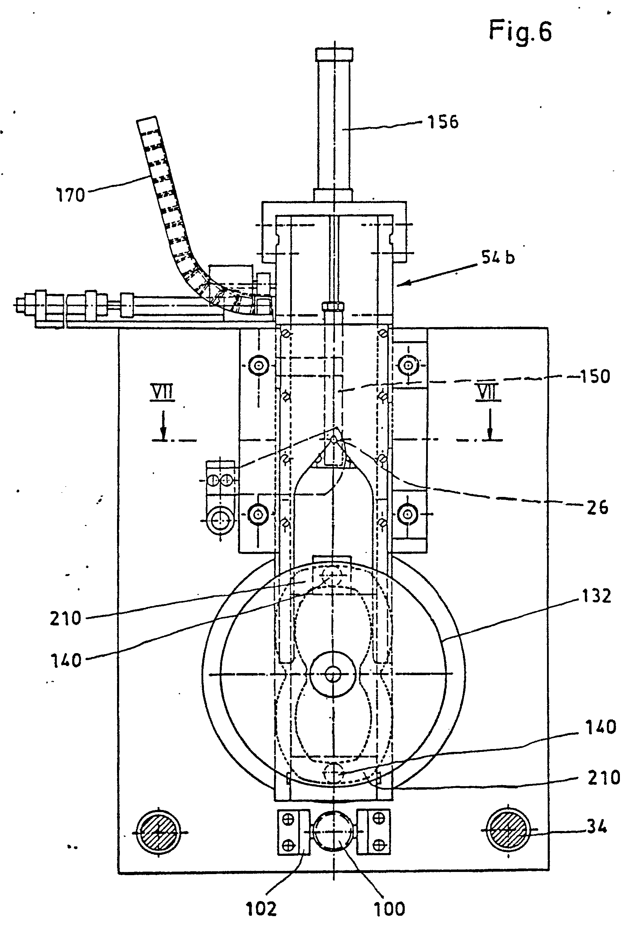

Die Bleche 60, 62 des Hauptrahmens 56 einerseits und der Hilfsrahmen 58 andererseits bilden die einzelnen Werkzeuge eines jeden Verdrängerwerkzeugpaares und sind hierzu mit V-förmigen Kanten 64 bzw. 66 versehen, die in senkrechter Projektion zur Ebene der Rahmen 56, 58 einen im wesentlichen rhombenförmigen Durchlaß 68 (Fig. 5) begrenzen, der durch Verschieben der Rahmen 56, 58 auf ein Kleinstmaß (Fig. 6) verminderbar ist, welches nur noch von zwei halbkreisförmigen Aussparungen 70, 72 in den Scheitelbereichen der V-förmigen Kanten 64, 66 bestimmt ist.

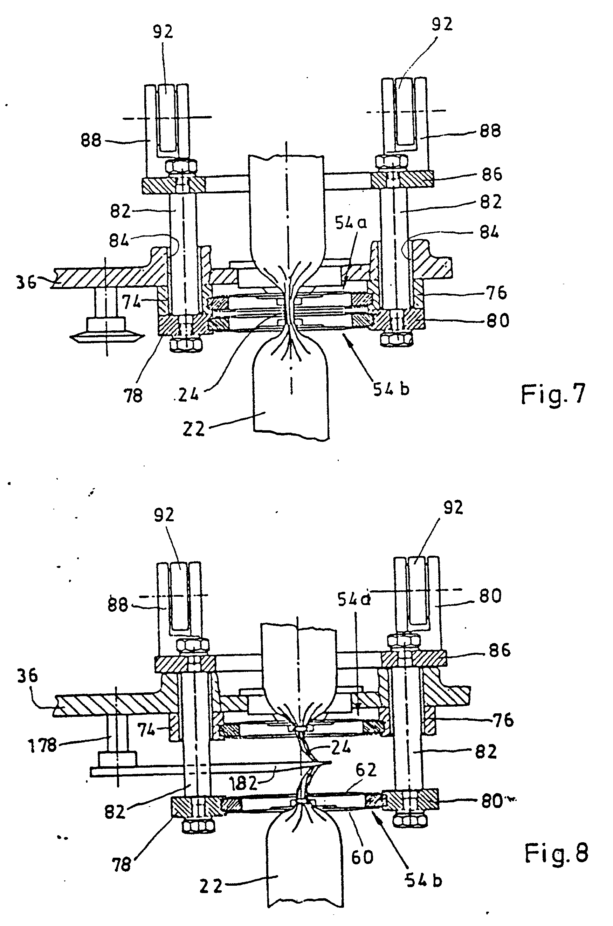

Der Hauptrahmen 56 des Verdrängerwerkzeugpaares 54a ist, wie den Fig. 7 und 8 zu entnehmen ist, zwischen genuteten Klötzen 74, 76 aus reibungsarmem Kunststoff wie insbesondere Polyfluortetraäthylen, die an der Trennwand 36 befestigt sind, vertikal verschieblich geführt. Der Klotz 74 ist verhältnismäßig lang ausgebildet, während auf der anderen Seite zwei kurze Klötze 76 mit Abstand übereinander den Hauptrahmen 56 führen, um gegebenenfalls die Zuführung von Wurstaufhängeschlaufen zu den Verdrängungswerkzeugen zu ermöglichen.

In ähnlicher Weise ist der Hauptrahmen 56 des zweiten Verdrängerwerkzeugpaares 54b zwischen genuteten Klötzen 78, 8o geführt, die an den einen Enden je zweier übereinander angeordneter Führungsstangen 82 befestigt sind. Die Führungsstangen 82 sind in ausgebuchsten Bohrungen 84 der Tragplatte 36 und der Klötze 74, 76 verschieblich gelagert und mit ihren anderen Enden an einer rahmenförmigen Druckplatte 86 befestigt (Fig. 3 und 4). Die senkrechten Schenkel der Druckplatte 86 tragen Lagerböcke 88 mit Lagerzapfen 9o, die von den geschlitzten oberen Enden zweier doppelarmiger Antriebshebel 92 erfaßt werden. Die Antriebshebel 92 sind in der Mitte in Lagerkonsolen 94 an der Tragplatte 36 gelagert und an den unteren Enden durch eine drehbar daran angebrachte Querstange 96 verbunden, an der die Kolbenstange 98 eines doppelt wirkenden hydraulischen Kraftzylinders 1oo angreift, dessen Gehäuse mit Hilfe von Laschen 1o2 schwenkbar an der Tragplatte 36 befestigt ist, welche im Bereich des Kraftzylinders 1oo ausgespart ist.

Durch Aus- und Einfahren der Kraftzylinder 1oo lassen sich demzufolge die Verdrängerwerkzeugpaare 54a, 54b auseinanderspreizen, wobei das Werkzeug 54a fest an der Tragplatte 36 verbleibt, während sich das Werkzeugpaar 54b von der Trägerplatte 36 entfernt.

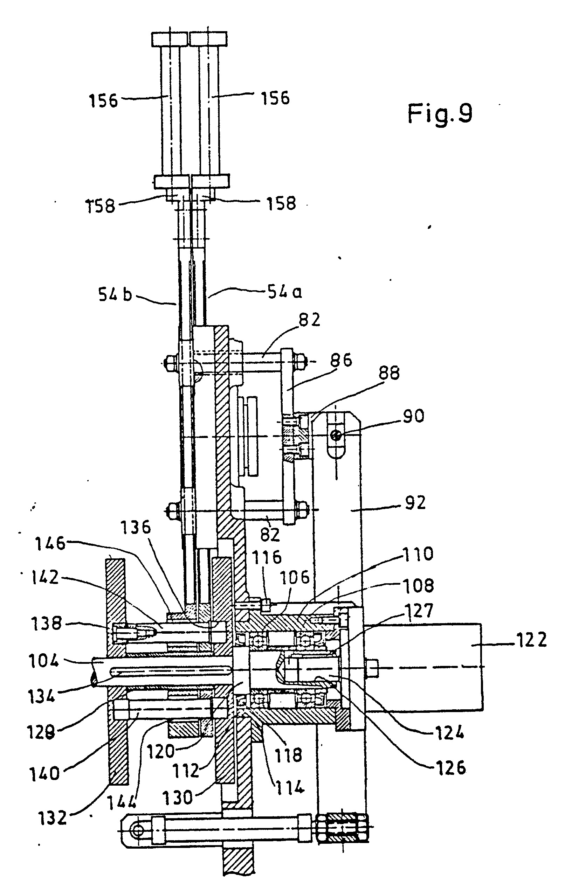

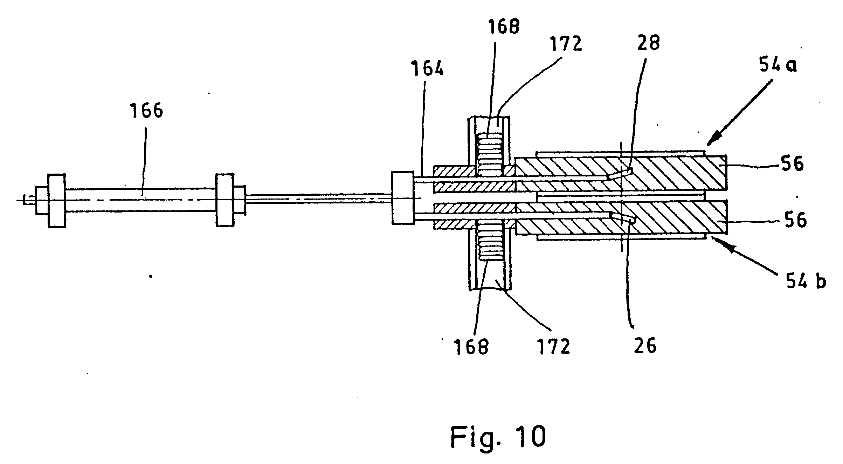

Zum Steuern der vertikalen Einschnürbewegungen der Rahmen 56, 58 der beiden Verdrängerwerkzeugpaare 54a, 54b dient eine Steuerwelle 1o4 (Fig. 9), die Kugellagern 1o6, 1o8 innerhalb eines Lagergehäuses 11o gelagert ist. Das Lagergehäuse 11o greift mit einem Kragen 112 in eine Bohrung 114 der Tragplatte 36 ein und ist an dieser mit Schrauben 116 befestigt. Der Kragen 112 enthält eine ringförmige Lippendichtung 118, die gegen einen Bund 12o der Steuerwelle 1o4 dichtet. An das entgegengesetztes Ende des Lagergehäuses 1o ist ein Hydraulikmotor 122 angeflanscht, dessen Abtriebswelle 124 in eine zentrale Bohrung 126 der Steuerwelle 1o4 eingreift und mit dieser durch eine Paßfeder 127 drehfest verbunden ist.

Auf die Steuerwelle 1o4 sind jenseits des Bundes 12o zwei durch eine Hülse 128 fest miteinander verbundene Kurvenscheiben 13o, 132 aufgeschoben und durch eine Paßfeder 134 drehfest mit der Steuerwelle 1o4 verbunden. Die Kurvenscheiben 13o, 132 enthalten an den gegeneinander weisenden Seiten miteinander fluchtende Steuernuten 136, 138, die, wie aus den Figuren 5 und 6 entnehmbar ist, angenähert die Form einer "Acht" mit zwei zu deren Querachse spiegelbildlichen hufeisenförmigen Abschnitten aufweisen. Die Steuerkurven 136, 138 haben auf ihrem gesamten Umfang die gleiche Breite und nehmen die Enden zweier übereinander befindlicher Steuerzapfen 14o, 142 auf, von denen der untere Steuerzapfen 14o in einer Bohrung des Hauptrahmens 56 des Verdrängerscherenpaares 54a und der obere Steuerzapfen 142 in einer Bohrung des zugehörigen Hilfsrahmens 58 undrehbar und unverschieblich befestigt sind. Die Steuerzapfen 14o, 142 erstrecken sich ferner durch mit Gleitbuchsen 144, 146 versehene Bohrungen in den Rahmen 56, 58 des zweiten Verdrängerwerkzeugpaares 54b und ermöglichen auf diese Weise deren Verschiebung beim Spreizen der Verdrängerwerkzeugpaare mit Hilfe des Kraftzylinders 1oo.

Die "acht"-förmigen Steuernuten 136, 138 sind so bemessen, daß in der in Fig. 5 gezeigten Stellung, in der die Steuerzapfen 14o, 142 der Steuerwelle 1o4 am nächsten sind, die Verdrängerwerkzeugpaare 54a, 54b unter Bildung des dort gezeigten vollen rhombenförmigen Durchlasses 68 geöffnet und in der in Fig. 6 gezeigten Stellung, in der die Steuerwelle 1o4 und die Kurvenscheiben 13o, 132 um 9o° gegenüber Fig. 5 gedreht sind und die Steuerzapfen 14o, 142 den größten Abstand von der Steuerwelle 1o4 haben, die Verdrängungswerkzeugpaare 54a, 54b unter Belassung eines nur noch von den halbkreisförmigen Aussparungen 7o. 72 gebildeten Restdurchlasses geschlossen sind. Zum Schließen und Wiederöffnen der Verdrängungswerkzeugpaare 54a, 54b bedarf es somit einer halben Umdrehung der Steuerwelle 1o4, und der Hydraulikmotor 122 ist derart betätigbar, daß mit jeder Einschaltung genau eine Drehung von 18o° aus der in Fig. 5 gezeigten Stellung der Kurvenscheiben über die in Fig. 6 gezeigte Stellung bis zum erneuten Erreichen der in Fig. 5 gezeigten Stellung ausgeführt wird, woraufhin der Motor augenblicklich stillgesetzt wird.

In jedem Verdrängungswerkzeugpaar 54a, 54b ist eine Verschließeinrichtung zum Setzen der Verschlußklammern 26, 28 integriert. Eine jede solche Verschließeinrichtung besteht in der Hauptsache aus einem als Patrize wirkenden flachem Stempel 15o, der in einer an der halbkreisförmigen Aussparung 7o endenden Führungsbahn 152 zwischen den Blechen 6o, 62 des Hauptrahmens 56 verschieblich geführt ist, und einer Matrize 154, die im Hilfsrahmen 58 befestigt ist und sich dort unmittelbar unterhalb der halbkreisförmigen Aussparung 72 befindet. Die Führungsbahn 152 ist in einen plattenförmigen Abschnitt des Hauptrahmens 56 eingearbeitet und weist einen dem Stempel 15o bzw. den Verschlußklammern angepaßten flachen Querschnitt auf, der um die Längsachse der Führungsbahn 152 gegenüber der Rahmenebene um einen geringen Winkel gedreht ist. Dieser Winkel ist durch das Verhältnis zwischen der Dicke des Klammermaterials und der Breite der Verschlußklammer bestimmt, die vom Stempel 15o durch die Führungsbahn nach unten bewegten Verschlußklammern mit ihren Schenkelenden um das Dickenmaß des Klammermaterials, in Längsrichtung des Wurststrangs betrachtet, versetzt zueinander auf die Matrize 154 stoßen, die mit zwei unmittelbar nebeneinander verlaufenden Nuten zum entgegengesetzten Umbiegen der Klammerschenkel versehen ist, wobei sich diese Nuten genau parallel zur Ebene der Rahmen 56, 58 erstrecken.

Zum Antrieb der Stempel 15o dienen hydraulische Kraftzylinder 156, die an Endteilen 158 der Hauptrahmen 56 befestigt und durch nicht gezeigte flexible Leitungen an die hydraulische Steuerung der Vorrichtung angeschlossen sind.

Zum Zuführen der Verschlußklammern 26, 28 vor die Stempel 15o sind die Hauptrahmen 56 der Verdrängerscherenpaare 54a, 54b mit quer zu den Führungsbahnen 152 verlaufenden Kanälen 16o versehen, welche in die Führungsbahnen 152 einmünden. Die Kanäle 16o sind zur einen Längsseite eines jeden Hauptrahmens 56 offen und fluchten dort bei geöffneten und ungespreizten Verdrängungswerkzeugen 54a, 54b mit an der Trägerplatte 36 festen Führungen 162, in denen je ein Schieber 164 mittels eines gemeinsamen doppelt wirkenden Kraftzylinders 166 verschieblich ist. Die Länge der Schieber 164 und der Hub des Kraftzylinders 166 sind so bemessen, daß die Schieber je eine ihnen außerhalb der Kanäle 16o in den den Führungen 162 vorgelegte Verschlußklammer in der vorbeschriebenen Stellung der Verdrängungswerkzeuge 54a, 54b bis in die Führungsbahnen 152 der Hauptrahmen 56 einstoßen und dadurch den Stempel 15o vorlegen können.

Die Klammern 28, 3o werden den Führungen 162 in Gestalt bekannter Klammerstreifen 168 aus Magazinen 17o über Führungsrinnen 172 mit Hilfe endloser Friktionsriemen 174 zugeführt, die von Elektromotoren 176 gegensinnig angetrieben werden.

In der Trägerplatte 36 ist außerhalb des Bereichs der Verdrängungswerkzeuge 54a und der Führungsklötze 74 eine Welle 178 gelagert, die auf beiden Seite der Trägerplatte 36 vorsteht und auf einem Ende einen Hebel 18o mit einem Schneidmesser 182 trägt, das bei gespreizten Verdrängungswerkzeugen 54a, 54b zwischen diese zum Durchtrennen des eingeschnürten und gedehnten Wurststrangs eingeschwenkt werden kann. Zum Antrieb des Schneidmessers 182 sitzt auf dem anderen Ende der Welle 178 ein Hebel 184, an dem ein doppelt wirkender hydraulischer Kraftzylinder 186 angreift, der mit seinem Gehäuse schwenkbar an der Trägerplatte 36 angelenkt ist.

Die Steuerwelle 1o4 ist, wie Fig. 1 zeigt, über die Kurvenscheiben 13o, 132 hinaus verlängert und trägt fünf Steuerkurven 19o, 192, 194, 196, 198, von denen je ein Steuerventil 2oo, 2o2, 2o4, 2o6, 2o8 während jeder 18o°-Drehung der Steuerwelle 1o4 betätigbar sind. Diese arbeiten wie folgt:
Das Steuerventil 2oo wird betätigt, sobald die Steuerzapfen 14o, 142 die zur Steuerwelle 1o4 konzentrischen äußeren Abschnitte 21o der Steuernuten 136, 138 erreicht haben, und lösen die Betätigung des Kraftzylinders 156 an dem Verdrängungswerkzeugpaar 54b aus, wodurch die dem dortigen Stempel vorgelegte Verschlußklammer 26 an der von den Verdrängungswerkzeugen 54a, 54b zuvor gebildeten und bis dahin noch nicht axial ausgedehnten Einschnürung gesetzt wird.

Das Steuerventil 2o2 löst die Betätigung des Kraftzylinders 1oo aus, mit welchem die Verdrängungswerkzeuge 54a, 54b auseinandergespreizt und dadurch die Einschnürung des Wurststrangs in die in Fig. 1 mit 24 bezeichnete Erstreckung ausgedehnt wird.

Das Steuerventil 2o4 wird kurz vor Erreichen des Endes eines jeden zur Steuerwelle 1o4 konzentrischen Abschnitts 21o der Steuernuten 136, 138 betätigt und löst die Betätigung des Kraftzylinders 156 an den Verdrängungswerkzeugen 54b aus, wodurch die Verschlußklammer 28 gesetzt wird.

Das Steuerventil 2o6 wird während des gesamten Durchgangs der Steuerzapfen 14o, 142 durch die konzentrischen Bereiche 21o der Steuernuten 136, 138 betätigt und bewirkt während dieser Zeitdauer eine Drosselung der Druckflüssigkeitszufuhr zu dem Hydraulikmotor 122, wodurch die Drehung der Steuerwelle 1o4 verzögert wird, um ausreichend Zeit für die drei zuvor beschriebenen Vorgänge zu gewährleisten und deren zeitliche Überschneidung zu verhindern.

Das Steuerventil 2o8 schließlich wird unmittelbar nach dem Setzen der zweiten Verschlußklammer 28 betätigt und bewirkt die Auslösung der Trennbewegung des Schneidmessers 182 mit Hilfe des Kraftzylinders 186.

Die Steuerventile 2oo - 2o8 sind in Fig. 1 aus Darstellungsgründen unterhalb der Steuerkurven 19o - 198 eingezeichnet, während sie in wirklichkeit um 9o° zur Steuerwelle 1o4 gedreht neben den Steuerkurven 19o - 198 an einer (nicht gezeigten) Tragleiste angeordnet sind, die an der Trägerplatte 36 befestigt ist. Es versteht sich von selbst, daß für die Steuerkurven 19o - 198 und die Steuerventile 2oo - 2o8 eine geeignete Abdeckung vorgesehen sein kann, die diese Elemente vor im Betrieb unvermeidliche Verschmutzungen schützt. An dieser Abdeckung können außerdem Rollen 212 gelagert sein, welche die abgeteilten Würste 22 führen und einem (nicht gezeigten) Behälter zuleiten.

Die Wirkungsweise der beschriebenen Vorrichtung ist evident:
Es sei angenommen, daß sich die Vorrichtung 20 in der in Fig. 2 gezeigten Freigabestellung befindet, in welcher eine Schlauchraupe 14 innerhalb des Prismas 48, 50 liegt. Wenn nun der Kraftzylinder 40 ausgefahren wird, wird die Trag- . platte 36 mit allen daran angebrachten Elementen einschließlich dem Magazin 42 nach rechts mit Bezug auf Fig. 2 in die in Fig. 1 gezeigte Stellung verschoben , wobei sich das Füllrohr 12 mit der im Prisma 48, 50 liegenden Schlauchraupe belädt und das von einer Verschlußklammer 16 verschlossene vordere Ende dieser Raupe durch die Darmbremse 18 hindurchgeführt wird.

Während dieses Vorgangs sind die Verdrängungswerkzeuge 54a, 54b gemäß der Darstellung in Fig. 5 geöffnet und nehmen die in Fig. 7 gezeigte ungespreizte Stellung ein.

Sobald die Tragplatte 36 ihre Arbeitsstellung erreicht hat, werden im Wechsel der Füllautomat 10 und der Hydraulikmotor 122 eingeschaltet. Der Füllautomat 10 stößt nach seiner Einschaltung Wurstbrät durch das Füllrohr 12 in das verschlossene vordere Ende der Schlauchraupe 14 und füllt das dabei vom Füllrohr durch die Darmbremse 18 hindurch abgezogene Schlauchhüllenmaterial mit Wurstbrät unter Bildung eines Wurststranges an, bis dieser die gewünschte Länge einer Wurst erreicht hat.

Mit der Einschaltung des Füllautomaten werden auch die Elektromotoren 176 eingeschaltet, und die Friktionsriemen 174 bewegen die Klammerstreifen 168 bis zum Erreichen der Führungen 162. Daraufhin fährt der Kraftzylinder 166 aus, und die davon betätigten Schieber 164 schieben die vordersten Klammern der beiden Klammerstreifen 168 durch die Kanäle 160 bis in die Führungsbahnen 152 unterhalb der Stempel 150, woraufhin der Kraftzylinder 166 mit den Schiebern 164 sofort in seine Ausgangslage zurückkehrt.

Daraufhin wird der Füllautomat 10 abgeschaltet, und der Hydraulikmotor 122 wird eingeschaltet und dreht die Steuerwelle 104 um eine halbe Drehung oder 180°.

Während dieser Drehung der Steuerwelle schließen zunächst die noch ungespreizten Verdrängungswerkzeuge 54a, 54b und bilden im Schließbereich eine zunächst verhältnismäßig kurze Einschnürung 24, die sich zwischen den halbkreisförmigen Aussparungen 70, 72 gemäß Fig. 6 erstreckt.

Mit dem Weiterdrehen der Steuerwelle 104 betätigt zunächst die Steuerkurve 190 das Steuerventil 200 für den hydraulischen Kraftzylinder 156 am Verdrängungswerkzeug 54b und setzt die von dem davon betätigten Stempel 150 vorgelegte Verschlußklammer 26 am vorderen Ende der Einschnürung 24. Gleichzeitig betätigt die Steuerkurve 196 das Steuerventil 206 und sorgt für eine gedrosselte Zufuhr von Druckflüssigkeit zum Hydraulikmotor 122, um dessen Drehung zu verlangsamen.

Mit dem Weiterdrehen der Steuerwelle 104 betätigt die Steuerkurve 192 das Steuerventil 202 und löst dadurch die Betätigung des Kraftzylinders 100 aus, der den doppelarmigen Antriebshebel 92 verschwenkt und dadurch über die Druckplatte 86, die Führungsstangen 82 und die Klötze 78, 80 das Verdrängungswerkzeugpaar 54b vom Verdrängungswerkzeugpaar 54a wegbewegt, wodurch die Einschnürung 24 in die in Fig. 1 gezeigte Form ausgedehnt wird.

Mit noch weiterer Drehung der Steuerwelle 104 betätigt schließlich die Steuerkurve 194 das Steuerventil 204 und löst dadurch die Betätigung des Kraftzylinders 156 am Verdrängungswerkzeugpaar 54a aus, wodurch der davon betätigte Clipstempel 150 die vorgelegte Verschlußklammer 28 auf das hintere Ende der Einschnürung 24 setzt.

Die vorbeschriebenen Vorgänge, die von den Steuerkurven 192, 194 und 196 ausgelöst werden, verlaufen sämtliche, während die Steuerzapfen 140, 142 die konzentrischen Abschnitte 210 der Steuernuten 136, 138 durchlaufen, d. h. die Verdrängungswerkzeuge 54a, 54b geschlossen sind.

Mit der Weiterdrehung der Steuerwelle 104 öffnen daraufhin die Verdrängungswerkzeuge 54a, 54b, die Stempel 150 kehren in ihre Ausgangsstellung zurück, die Verdrängungswerkzeuge 54a, 54b öffnen und das Verdrängungswerkzeug 54b wird vom Kraftzylinder 100 in die dem Verdrängungswerkzeugpaar 54a benachbarte Stellung zurückgeführt. Damit kann eine Füllphase durch Einschaltung des Füllautomaten 10 beginnen, und der vorbeschriebene Vorgang wiederholt sich in der aufgezeigten Reihenfolge, bis das Schlauchhüllenmaterial auf dem Füllrohr 12 verbraucht ist. Hieraufhin fährt der Kraftzylinder 40 ein und verschiebt die Tragplatte 36 mit allen daran befindlichen Elementen erneut in die Freigabestellung gemäß Fig. 2, in welcher der Kraftzylinder 52 betätigt wird und eine neue Schlauchraupe 14 in das Prisma 48, 50 gelahgen läßt.

Damit ist die Ausgangsstellung wieder erreicht, und der gesamte Vorgang beginnt von neuem.

Die Erfindung ist nicht auf das Setzen der Verschlußklammer 26 vor dem Ausdehnen der Einschnürung 24 beschränkt. Selbstverständlich kann auch erst die Einschnürung 24 ausgedehnt werden, und daraufhin können die beiden Verschlußklammern 26, 28 gleichzeitig gesetzt werden. Das vorzeitige Setzen der Verschlußklammer 26 hat jedoch den Vorteil, daß beim Ausdehnen der Einschnürung 24 das dabei verdrängte Wurstbrät nicht in die Wurst 22 befördert wird, sondern vielmehr eine entsprechende Menge an Schlauchhüllenmaterial vom Füllrohr 12 abgezogen wird.

Der durch die oben beschriebenen Vorgänge hergestellte Wurststrang kann unzerteilt bleiben. Durch gleichzeitige Betätigung des Kraftzylinders 186 zusammen mit dem Setzen der zweiten Verschlußklammer 28 kann jedoch die Einschnürung 24 nach jedem Abteilvorgang mit Hilfe des Schneidmessers 182 durchtrennt werden, so daß einzelne Würste über die Rollen 212 zu dem (nicht gezeigten) Auffangbehälter gelangen.

**Ansprüche**

1. Verfahren zum Abteilen eines auf einem Füllautomaten (10) hergestellten Wurststrangs in eine Vielzahl voneinander trennbarer oder getrennter Würste (22) durch intermittierendes Füllen eines vom Füllrohr (12) des Füllautomaten (10) durch eine Darmbremse (18) ablaufenden Wursthüllenschlauchs, der in den Füllpausen unmittelbar vor der Füllrohrmündung mit Hilfe von Verdrängungswerkzeugen (54 a, 54 b) eingeschnürt und durch Setzen zweier zueinander beabstandeter Klammern (26, 28) aus je einem beliebig nachfüllbaren Klammervorrat (168) mittels an den Verdrängungswerkzeugen (54 a, 54 b) angeordneter Verschließwerkzeuge (150, 154) unter Bildung einer dazwischen liegenden Trennstelle verschlossen sowie gegebenenfalls an der Trennstelle durchtrennt wird, wobei das Einschnüren zunächst auf einer eng begrenzten Länge des Wurststrangs erfolgt und die Einschnürung (24) anschließend durch axiales Spreizen der Verdrängungswerkzeuge auf das Abstandsmaß der Klammern (26, 28) ausgedehnt wird, **dadurch gekennzeichnet,** daß die Klammervorräte (168) ortsfest gehalten werden und die beiden Klammern (26, 28) bereits während der dem Einschnüren und Verschließen vorausgehenden Füllphase von den Klammervorräten (168) abgesondert und den Verschließwerkzeugen (150) bei geöffneten Verdrängungswerkzeugen (54 a, 54 b) quer zur Setzrichtung der Klammern (26, 28) vorgelegt werden.

2. Verfahren nach Anspruch 1, **dadurch gekennzeichnet,** daß die in Ablaufrichtung des Wursthüllenschlauchs vordere Klammer (26) bereits vor dem Ausdehnen der Einschnürung (24) gesetzt wird und das Ausdehnen der Einschnürung durch Bewegen der Verdrängungs- und Verschließwerkzeuge (54 b) für diese Klammer (26) vom Füllrohr (12) weg bei ortsfester Stellung der Verdrängungs- und Verschließwerkzeuge (54 a) für die zweite Klammer (30) erfolgt, woraufhin die zweite Klammer (30) gesetzt wird.

3. Verfahren nach Anspruch 1 oder 2, **dadurch gekennzeichnet,** daß wenigstens die vordere Klammmer (26) so gesetzt wird, daß sich ihre Schenkelenden überlappen.

4. Verfahren nach Anspruch 3, **dadurch gekennzeichnet,** daß die sich mit den Schenkelenden überlappenden Klammern (26, 28) beim Setzen mit ihren Stegteilen einen solchen Winkel zu einer radialen Querebene zum Wurststrang ein-schliessen, daß die Ebenen, in denen die einander überlappenden Schenkelenden liegen, senkrecht zur Achse des Wurststrangs verlaufen.

5. Verfahren nach einem der vorhergehenden Ansprüche, bei welchem nach dem vollständigen Verbrauch des vom Füllrohr (12) ablaufenden Wursthüllenschlauchs die Verdrängungs-und Verschließwerkzeuge (54 a, 54 b; 150, 154) mit der Darmbremse (18) in eine das Füllrohr (12) freigebende Stellung gebracht werden, die das Aufbringen eines neuen Schlauchhüllenvorrats auf (14) auf das Füllrohr ermöglicht, **dadurch gekennzeichnet,** daß der neue Schlauchhüllenvorrat (14) in der vorerwähnten Freigabestellung selbsttätig in eine mit dem Füllrohr (12) fluchtende Stellung gebracht und mit dem Zurückbringen der Verdrängungs-und Verschließwerkzeuge (54 a, 54b; 150, 154) in die Arbeitsstellung auf das Füllrohr (12) aufgeschoben wird.

6. Vorrichtung zur Durchführung des Verfahrens nach einem der Ansprüche 1 bis 5, mit einer Darmbremse (18) und zwei Paaren gegensinnig betätigbarer V-förmiger Verdrängungswerkzeuge (54 a, 54 b), denen je eine Verschließeinrichtung (150, 154) zugeordnet ist, wobei die beiden Verdrängungswerkzeuge (54 a, 54 b) in Richtung des Wurststrangs relativ zueinander bewegbar sind, **dadurch gekennzeichnet,** daß die in bekannter Weise aus verschieblich antreibbaren Stempeln (150) und festen Matrizen (154) bestehenden Verschließwerkzeuge in die Verdrängungswerkzeuge (54 a, 54 b) integriert sind und die die Stempel (150) enthaltenden Verdrängungswerkzeuge (56) quer zur Verschieberichtung der Stempel verlaufende Kanäle (160) aufweisen, durch welche bei geöffneten und ungespreizten Verdrängungswerkzeugen je eine Verschlußklammer (26, 28) aus einem ortsfesten Magazin (170) in die Bewegungsbahn des Verschließstempels (150) einführbar ist.

7. Vorrichtung nach Anspruch 6, **dadurch gekennzeichnet,** daß die Stempel (150) und Matrizen (154) der Verschließeinrichtungen zum Setzen der Klammern (26, 28) mit einander überlappenden Schenkelenden ausgebildet und derart im Winkel zu einer radialen Querebene zum Wurststrang (22) gedreht angeordnet sind, daß die Ebenen in denen die einander überlappenden Schenkelenden liegen, senkrecht zur Achse des Wurststrangs (18) verlaufen.

8. Vorrichtung nach Anspruch 6 oder 7, **dadurch gekennzeichnet,** daß bei geöffneten und ungespreizten Verdrängungswerkzeugen (45a, 45b) an die darin enthaltenen Kanäle (160) ortsfeste Führungen (162) fluchtend anschließen, in welche jeweils die vorderste Verschlußklammer (26, 28) eines quer dazu verschieblichen Klammerstreifens (168) eingreift und daß jeder Führung (162) ein von einem steuerbaren Antrieb (166) betätigbarer Schieber (164) zugeordnet ist, mit welchem die vorderste Verschlußklammer (26, 28) vom Klammerstreifen (168) abtrennbar und durch die Führung (162) und dem Kanal (160) in die Führungsbahn (152) des Verschließstempels (150) beförderbar ist.

9. Vorrichtung nach einem der Ansprüche 6 bis 8, **dadurch gekennzeichnet,** daß die Verschließstempel (150) von hydraulischen Kraftzylindern (156) antreibbar sind, welche an den Verdrängungswerkzeugen (54a, 54b) befestigt sind.

10. Vorrichtung nach einem der Ansprüche 6 bis 9, **dadurch gekennzeichnet,** daß die Verdrängungswerkzeuge (54a, 54b) von Kurvenscheiben (130, 132) steuerbar sind, welche so ausgebildet sind, daß die Einschnürstellung der Verdrängungswerkzeuge (54a, 54b) über einen größeren Drehwinkel hinweg aufrecht erhalten bleibt, und daß mit den Kurvenscheiben (130, 132) Steuerkurven (190, 192, 194) drehfest verbunden sind, von denen in der Einschnürstellung der Verdrängungswerkzeuge (54a, 54b) das Spreizen derselben und das Betätigen der Verschließstempel (150) steuerbar ist.

11. Vorrichtung nach Anspruch 10, **dadurch gekennzeichnet,** daß mit den Kurvenscheiben (130, 132) eine weitere Steuerkurve (196) drehfest verbunden ist, von welcher eine Verringerung der Drehgeschwindigkeit der Kurvenscheiben (130, 132) in der Einschnürstellung der Verdrängungswerkzeuge (54a, 54b) steuerbar ist.

12. Vorrichtung nach einem der Ansprüche 10 oder 11, **dadurch gekennzeichnet,** daß die Kurvenscheiben (130, 132) und die Steuerkurven (190-196) auf einer gemeinsamen Welle (104) angeordnet sind, die von einem elektrischen oder hydraulischen Schaltantrieb (122) nach jedem Füllvorgang um 180° drehbar ist.

13. Vorrichtung nach Anspruch 12, **dadurch gekennzeichnet,** daß die Kurvenscheiben (130, 132) von Kreisscheiben mit auf den gegeneinander weisenden Stirnseiten angeordneten Steuernuten (136, 138) zur Aufnahme der Enden von Steuerzapfen (140, 142) ausgebildet sind, von denen je ein Verdrängungswerkzeug eines jeden Werkzeugpaars (54a, 54b) antreibbar ist.

14. Vorrichtung nach Anspruch 13, **dadurch gekennzeichnet,** daß die beiden Verdrängungswerkzeuge des einen Werkzeugpaars (54a) fest auf den Steuerzapfen (140, 142) und die beiden Verdrängungswerkzeuge des anderen Werkzeugspaars (54b) axial verschieblich auf dem Steuerzapfen 140, 142) gelagert sind, und daß eine steuerbare Spreizeinrichtung (82-100) zum Verschieben des zweiten Werkzeugpaars (54b) auf den Steuerzapfen (140, 142) vorgesehen ist.

15. Vorrichtung nach Anspruch 14, **dadurch gekennzeichnet,** daß die Spreizeinrichtung (82-100) von einem doppeltwirkenden hydraulischen Kraftzylinder (100) betätigbar ist.

16. Vorrichtung nach einem der Ansprüche 6 bis 14, die gegenüber dem Füllrohr eines Wurstfüllautomaten axial verschieblich angeordnet und mittels eines Verschiebeantriebs aus einer Arbeitsstellung, in welcher die Darmbremse das Füllrohr übergreift und die Verdrängungswerkzeuge unmittelbar vor der Füllrohrmündung angeordnet sind, in eine das Füllrohr freigebende Stellung verschiebbar ist, **dadurch gekennzeichnet,** daß an der Vorrichtung ein Magazin (42) für zu Hohlstäben (14) gerafften Wursthüllenschläuchen sowie eine Haltevorrichtung (48, 50) angebracht sind, welcher nach jedem Verschieben der Vorrichtung (20) in die Freigabestellung ein Hohlstab (14) aus dem Magazin (42) gesteuert zuführbar ist, wobei die Haltevorrichtung (48, 50) eine solche Lage zum Füllrohr (12) des Füllautomaten (10) innen hat, daß das Füllrohr (12) beim Zurückverschieben der Vorrichtung (20) in die Arbeitsstellung durch den Hohlstab (14) hindurchfährt und sich dadurch von selbst mit dem Hohlstab (14) belädt.

## Claims

1. Method for dividing a continuous sausage produced in an automatic filling machine (10) into a plurality of sausages (22), which are separate or can be separated from one another, by intermittently filling a sausage casing, which passes from the filling tube (12) of the automatic filling machine (10) through a skin brake (18), is constricted in the filling pauses directly in front of the filling tube orifice by means of displacement tools (54a, 54b), is closed by applying two spaced clips (26, 28) from a respective clip supply (168), which can be replenished as desired, by means of closing tools (150, 154), which are arranged on the displacement tools (54a, 54b), with the formation of a separating point lying in between, and, if applicable, is severed at the separating point, the constriction operation initially taking place over a limited length of the continuous sausage and the constriction (24) then being enlarged by axially spreading apart the displacement tools to the spacing of the clips (26, 28), characterised in that the clip supplies (168) are maintained stationary and the two clips (26, 28) are separated from the clip supplies (168) during the filling phase, which precedes the constriction and closing operations, and are presented to the closing tools (150) when the displacement tools (54a, 54b) are open transversely to the direction in which the clips (26, 28) are applied.

2.  Method according to claim 1, characterised in that the clip (26) which is in front in the direction of movement of the sausage casing is applied before the constriction (24) is enlarged, and this enlargement is carried out by moving the displacement and closing tools (54b) for this clip (26) away from the filling tube (12), with the displacement and closing tools (54a) for the second clip (30) in a fixed position, whereupon the second clip (30) is applied.

3.  Method according to claim 1 or 2, characterised in that at least the front clip (26) is applied such that its side piece ends overlap.

4.  Method according to claim 3, characterised in that, when they are applied, the clips (26, 28) with overlapping side piece ends form with their crosspieces an angle with respect to a radial plane extending transversely to the continuous sausage which is such that the planes in which the overlapping side piece ends lie extend perpendicular to the axis of the continuous sausage.

5.  Method according to one of the preceding claims, in which, after the sausage casing passing from the filling tube (12) has been completely used, the displacement and closing tools (54a, 54b; 150, 154) are brought with the skin brake (18) into a position which releases the filling tube (12) and which enables a new casing supply (14) to be applied to the filling tube, characterised in that, when in the abovementioned released position, the new casing supply (14) is automatically brought into a position of alignment with the filling tube (12) and slipped onto the filling tube (12) when the displacement and closing tools (54a, 54b; 150, 154) are returned to the working position.

6.  Device for carrying out the method according to one of claims 1 to 5, comprising a skin brake (18) and two pairs of V-shaped displacement tools (54a, 54b), which can be actuated in opposite directions, with each of which a closing device (150, 154) is associated and which can be moved relative to one another in the direction of the continuous sausage, characterised in that the closing tools, which consist in a known manner of punches (150), which can be driven, and stationary bottom dies (154) are incorporated in the displacement tools (54a, 54b), and the displacement tools (56), which include the punches (150), comprise ducts (160) which extend transversely to the direction of movement of the punches and through which a respective closing clip (26, 28) can be introduced from a stationary store (170) into the path of movement of the closing punch (150) when the displacement tools are open and not spread apart.

7.  Device according to claim 6, characterised in that the punches (150) and bottom dies (154) of the closing devices are formed for applying the clips with overlapping side piece ends and are turned at an angle with respect to a radial plane extending transversely to the continuous sausage (22) such that the planes in which the overlapping side piece ends lie extend perpendicular to the axis of the continuous sausage (22).

8.  Device according to claim 6 or 7, characterised in that, when the displacement tools (54a, 54b) are open and not spread apart, stationary guides (162) adjoin the ducts (160) in these displacement tools in an aligned manner, in which guides the respective front closing clip (26, 28) of a strip of clips (168), which can be moved transversely to the guides, engages, and that a pushing member (164), which can be actuated by a controllable drive (166), is associated with each guide (162), by means of which member the front closing clip (26, 28) can be separated from the strip of clips (168) and conveyed through the guide (162) and the duct (160) into the guideway (152) of the closing punch (150).

9.  Device according to one of claims 6 to 8, characterised in that the closing punches (150) can be driven by hydraulic cylinders (156), which are secured to the displacement tools (54a, 54b).

10. Device according to one of claims 6 to 9, characterised in that the displacement tools (54a, 54b) can be controlled by cam discs (130, 132), which are formed such that the constriction position of the displacement tools (54a, 54b) is maintained over a relatively large angle of rotation, and that control cams (190, 192, 194) are non-rotatably connected to the cam discs (130, 132) and, when the displacement tools (54a, 54b) are in the constriction position, can control the operation by which the latter are spread apart and the actuation of the closing punches (150).

11. Device according to claim 10, characterised in that a further control cam (196) is non-rotatably connected to the cam discs (130, 132) and can control a reduction in the rotational speed of the cam discs (130, 132) when the displacement tools (54a, 54b) are in the constriction position.

12. Device according to one of claims 10 and 11, characterised in that the cam discs (130, 132) and the control cams (190 - 196) are arranged on a common shaft (104), which can be rotated through 180° by an electric or hydraulic switching drive after each filling operation.

13. Device according to claim 12, characterised in that the cam discs (130, 132) are formed by circular discs with control grooves (136, 138), which are arranged in the facing front sides, for accommodating the ends of control pins (140, 142), by which a respective displacement tool of each tool pair (54a, 54b) can be driven.

14. Device according to claim 13, characterised in that the two displacement tools of one tool pair (54a) are mounted firmly on the control pins (140, 142) and the two displacement tools of the other tool pair (54b) are mounted in an axially mobile manner on the control pins (140, 142), and that a controllable spreading device (82 - 100) for moving the second tool pair (54b) on the control pins (140, 142) is provided.

15. Device according to claim 14, characterised in that the spreading device (82 - 100) can be actuated by a doubleacting hydraulic cylinder (100).

16. Device according to one of claims 6 to 14, which is arranged in an axially mobile manner opposite the filling tube of an automatic sausage filling machine and can be moved by means of a shifting drive out of a working position, in which the skin brake engages over the filling tube and the displacement tools are directly in front of the filling tube orifice, into a position which releases the filling tube, characterised in that a store (42) for sausage casings, which are gathered to form hollow rods (14), and a holding device (48, 50) are mounted on the device, to which holding device a hollow rod (14) can be delivered in a controlled manner from the store (42) following each movement of the device (20) into the release position, the holding device (48, 50) being positioned with respect to the filling tube (12) of the automatic filling machine (10) such that when the device (20) is returned to the working position the filling tube (12) passes through the hollow rod (14) and thus loads itself with the hollow rod (14).

## Revendications

1. Procédé pour diviser un chapelet de saucisses formé par une machine de bourrage automatique (10) en une pluralité de saucisses (22) séparables ou séparées par remplissage intermittent d'une enveloppe de saucisse passant du tube de remplissage (12) de la machine de bourrage automatique (10) à travers un frein pour boyau, enveloppe qui dans les pauses de remplissage est serrée directement devant l'ouverture du tube de remplissage à l'aide d'outils de déplacement (54a et 54b) et est fermée par la mise en place de deux agrafes (26, 28) distantes l'une par rapport à l'autre et provenant d'une réserve d'agrafes (168) que l'on peut remplir à volonté, la mise en place ayant lieu au moyen d'outils de fermeture (150, 154) disposés sur les outils de déplacement (54a, 54b), en formant un lieu de séparation se situant entre les deux, celle-ci étant éventuellement séparée au lieu de séparation, le serrage s'effectuant sur une longueur étroitement limitée du boyau de saucisse et enfin l'étranglement (24) s'allongeant par l'écartement axial des outils de déplacement sur la distance des agrafes (26, 28), caractérisé en ce que les réserves d'agrafes (168) sont maintenues fixes et les deux agrafes (26, 28) sont déjà détachées des réserves d'agrafes pendant la phase de remplissage précédent le serrage et la fermeture et sont placées devant les outils de fermeture (150) avec les outils de déplacement ouverts (54a, 54b) transversalement à la direction de pose des agrafes (26, 28).

2. Procédé selon la revendication 1, caractérisé en ce que l'agrafe avant (26) dans le sens d'avancement de l'enveloppe de saucisse est déjà mise en place avant l'allongement de l'étranglement (24) et l'allongement de l'étranglement se produit par le mouvement des outils de déplacement et de fermeture (54b) pour cette agrafe (26) depuis le tube de remplissage (12) après position fixe des outils de déplacement et de fermeture (54a) pour la deuxième agrafe (30), après que la deuxième agrafe (30) est placée.

3. Procédé selon la revendication 1 ou 2, caractérisé en ce qu'au moins l'agrafe avant (26) est posée de façon que les extrémités de ses branches se recouvrent.

4. Procédé selon la revendication 3, caractérisé en ce que, les agrafes se recouvrant par leurs extrémités de branche (26, 28) comprennent dans leur mise en place avec leurs âmes un angle tel par rapport à un plan transversal radial au chapelet de saucisse, que les plans dans lesquels les extrémités des branches se recouvrent l'une l'autre sont perpendiculaires à l'axe du chapelet de saucisses.

5. Procédé selon l'une des revendications précédentes, dans lequel après l'utilisation complète de l'enveloppe de saucisse venant du tube de remplissage, les outils de déplacement et de fermeture (54a, 54b ; 150, 154) avec le frein pour boyau (18) sont amenés dans une position libérant le tube de remplissage (12), position qui rend possible l'amenée d'une nouvelle réserve d'enveloppe en boyau au tube de remplissage, caractérisé en ce que la nouvelle réserve d'enveloppe en boyau (14) est amenée automatiquement pendant la libération citée précédemment dans une position alignée avec le tube de remplissage (12) et est poussée dans la position de travail sur le tube de remplissage (12) par le retour des outils de déplacement et de fermeture (54a, 54b ; 150, 154).

6. Dispositif pour la réalisation du procédé selon l'une des revendications 1 à 5, avec un frein pour boyau (18) et deux paires d'outils de déplacement (54a, 54b) en forme de V actionnables mutuellement, auxquels respectivement est coordonné un dispositif de fermeture (150, 154), les deux outils de déplacement (54a, 54b) pouvant se déplacer relativement l'un par rapport à l'autre dans le sens du chapelet de saucisses, caractérisé en ce que les outils de fermeture composés, de manière connue, de poinçons (150) pouvant se déplacer par translation et de matrices fixes (154) sont intégrés dans les outils de déplacement (54a et 54b) et en ce que les outils de déplacement (56) munis des poinçons (150) comportent des canaux (160) se développant perpendiculairement au sens de translation des poinçons, canaux par lesquels avec les outils de déplacement ouverts et non écartés chaque fois une agrafe de fermeture (26, 28) peut être insérée du magasin fixe (170) sur la ligne de mouvement du poinçon de fermeture (150).

7. Dispositif selon la revendication 6, caractérisé en ce que les poinçons (150) et matrices (154) des dispositifs de fermeture sont réalisés pour la mise en place des agrafes (26, 28) avec leurs extrémités se recouvrant l'une sur l'autre et de ce fait sont disposées tournées dans l'angle par rapport à un plan radial perpendiculaire au chapelet de saucisses (22).

8. Dispositif selon la revendication 6 ou 7, caractérisé en ce que avec les outils de déplacement ouverts et non écartés (45a, 45b) des guides fixes (162) rejoignent en alignement les canaux (160) contenus dans ces outils, guides dans lesquelles respectivement l'agrafe la plus en avant (26, 28) d'une bande d'agrafes mobile perpendiculairement s'insère et en ce qu'à chaque guide (162) est coordonné un poussoir (164) actionné par un mouvement de commande (166), par lequel l'agrafe la plus en avant (26, 28) peut se séparer de la bande d'agrafes (168) et par la glissière (162) et le canal (160) peut être transportée dans la voie de glissière (152) du poinçon de fermeture (150).

9. Dispositif selon l'une des revendications 6 à 8, caractérisé en ce que les poinçons de fermeture (150) sont actionnables par des cylindres à énergie hydraulique (156), qui sont fixés sur les outils de mouvement (54a, 54b).

10. Dispositif selon l'une des revendications 6 à 9, caractérisé en ce que les outils de déplacement (54a, 54b) sont commandables par des disques à came (130, 132) qui sont réalisés de façon que l'opération de serrage des outils de déplacement (54a, 54b) reste maintenue dans un angle de rotation très grand et en ce qu'aux disques à came (130, 132) sont liées solidaires en rotation des cames de commande (190, 192, 194), par lesquelles on peut, dans la position de serrage des outils de déplacement (54a, 54b), commander l'écartement de ceux-ci mêmes et le fonctionnement des outils de fermeture (150).

11. Dispositif selon la revendication 10, caractérisé en ce qu'aux disques à cames (130, 132) est liée solidaire en rotation une autre came de commande (196), par laquelle on peut commander une diminution de la vitesse de rotation des disques à cames (130, 132) dans la position de serrage des outils de mouvement (54a, 54b).

12. Dispositif selon l'une des revendications 10 ou 11, caractérisé en ce que les disques à cames (130, 132) et les cames de commande (190-196) sont placées sur un arbre commun (104) qui peut tourner de 180° après chaque opération de remplissage par suite d'un mécanisme de manoeuvre (122) électrique ou hydraulique.

13. Dispositif selon la revendication 12, caractérisé en ce que les cames (130, 132) des disques circulaires sont réalisées avec des rainures de commande (136, 138), disposées sur les faces frontales se présentant l'une en face de l'autre pour recevoir les extrémités des tourillons de commande (140, 142), à partir desquels respectivement un outil de déplacement de chaque paire d'outils (54a, 54b) peut être commandé.

14. Dispositif selon la revendication 13, caractérisé en ce que les deux outils de déplacement d'une paire d'outils (54a) sont logés fixes sur les tourillons de commande (140, 142) et les deux outils de mouvement de l'autre paire d'outils (54b) sont logés avec translation possible axialement sur les tourillons de commande (140, 142), et en ce qu'un dispositif d'écartement commandable (82-100) est prévu pour la translation de la deuxième paire d'outils (54b) sur les tourillons de commande (140, 142).

15. Dispositif selon la revendication 14, caractérisé en ce que le dispositif d'écartement (82-100) peut être actionné par un cylindre à énergie (100) hydraulique à double effet.

16. Dispositif selon l'une des revendications 6 à 14, qui est disposé avec possibilité de translation axiale en face du tube de remplissage d'une machine automatique de bourrage de saucisses et peut être déplacé au moyen d'une commande de translation d'une position de travail, dans laquelle le frein pour boyau mord le tuyau de remplissage et les outils de déplacement sont placés directement devant l'orifice du tuyau de remplissage, dans une position libérant le tuyau de remplissage, caractérisé en ce que, sur le dispositif sont installés un magasin (42) pour les enveloppes de saucisses serrées en bâtonnets creux (14) ainsi qu'un dispositif de soutien (48, 50), auquel peut être amené guidé du magasin (42) après chaque translation du dispositif (20) dans la position de libération un bâtonnet creux (14), le dispositif de soutien (48, 50) ayant une position par rapport au tube de remplissage (12) de la machine de bourrage automatique (10) telle, que le tube de remplissage (12) pendant la translation de retour du dispositif (20) dans la position de travail traverse le bâtonnet creux (14) et se charge par suite de lui-même du bâtonnet creux (14).

Fig. 1

Fig. 2

Fig.3

Fig.4

Fig. 5

# Fig.6

Fig.7

Fig.8

Fig.9

EP 0 247 545 B1

Fig. 10

Fig. 11